# EUROPÄISCHE PATENTSCHRIFT

(11) **EP 2 188 948 B1**
(45) Veröffentlichungstag und Bekanntmachung des Hinweises auf die Patenterteilung: **18.05.2011**
(21) Anmeldenummer: 08787313.9
(22) Anmeldetag: 19.08.2008
(51) Int. Cl.: H04L 12/24, H04L 12/26

(54) **VERFAHREN ZUM RECHNERGESTÜTZTEN BESTIMMEN EINER STEUERUNGSGRÖSSE, STEUERUNG, REGELSYSTEM UND COMPUTERPROGRAMMPRODUKT**
METHOD FOR THE COMPUTER-AIDED DETERMINATION OF A CONTROL VARIABLE, CONTROLLER, REGULATING SYSTEM AND COMPUTER PROGRAM PRODUCT
PROCÉDÉ DE DÉTERMINATION D'UNE GRANDEUR DE COMMANDE ASSISTÉ PAR ORDINATEUR, COMMANDE, SYSTÈME DE RÉGLAGE ET PRODUIT DE PROGRAMME INFORMATIQUE

(30) Priorität: 11.09.2007 EP 07017798
(43) Veröffentlichungstag der Anmeldung: 26.05.2010
(73) Patentinhaber: Siemens Aktiengesellschaft, 80333 München (DE)
(72) Erfinder: TOKER, Ahmet Cihat, 10457 Berlin (DE); ALBAYRAK, Sahin, 14195 Berlin (DE); ANDERSEN, Frank-Uwe, 10625 Berlin (DE); FAN, Changpeng, 10557 Berlin (DE); WEPIWÉ, Giscard, 64546 Mörfeden-Walldorf (DE)
(86) Internationale Anmeldenummer: PCT/EP2008/060831
(87) Internationale Veröffentlichungsnummer: WO 2009/033916

(56) Entgegenhaltungen:
- EP-A- 1 244 248
- US-B1- 6 173 323
- JIA JIAO ET AL: "Toward Efficient Monitoring" IEEE JOURNAL ON SELECTED AREAS IN COMMUNICATIONS, IEEE SERVICE CENTER, PISCATAWAY, US, Bd. 18, Nr. 5, Mai 2000 (2000-05), XP011055122 ISSN: 0733-8716
- DILMAN M ET AL: "Efficient reactive monitoring" PROCEEDINGS IEEE INFOCOM 2001. THE CONFERENCE ON COMPUTER COMMUNICATIONS. 20TH. ANNUAL JOINT CONFERENCE OF THE IEEE COMPUTER ANDCOMMUNICATIONS SOCIETIES. ANCHORAGE, AK, APRIL 22 - 26, 2001, PROCEEDINGS IEEE INFOCOM. THE CONFERENCE ON COMPUTER COMMUNI, Bd. VOL. 1 OF 3. CONF. 20, 22. April 2001 (2001-04-22), Seiten 1012-1019, XP010538789 ISBN: 0-7803-7016-3

## Beschreibung

Die Erfindung betrifft ein Verfahren zum rechnergestützten Bestimmen einer Steuerungsgröße anhand von Kontextinformationen einer oder mehrerer zu steuernder Einheiten sowie eine zur Durchführung des Verfahrens ausgebildete Steuerung. Die Erfindung betrifft weiter ein Regelsystem sowie ein Computerprogrammprodukt.

Die der Erfindung zugrunde liegende Problematik wird anhand von Kommunikationsnetzwerken beschrieben. Dies geschieht lediglich zum Zwecke der Illustration und ist jedoch nicht als einschränkend zu betrachten.

In Kommunikationsnetzwerken werden zunehmend häufiger Kontextinformationen zur Steuerung des Kommunikationsnetzwerks verwendet. Kontextinformationen stellen jegliche Informationen dar, die von irgendeiner Einheit des Kommunikationsnetzwerks (z.B. ein Endgerät, ein Zugangsrechner, ein Vermittlungsrechner, usw.) im Zusammenhang mit einem Ereignis erzeugt wurden. Eine Einheit, die Kontextinformation erzeugt und anderen Komponenten des Kommunikationsnetzwerks zur Verfügung stellt, wird auch als Kontextquelle oder Quelle bezeichnet. Die Verwendung von Kontextinformationen ermöglicht es beispielsweise, den Zustand oder Status eines Netzwerkelements, auch Einheit genannt, ohne den expliziten Austausch von Signalisierungsnachrichten über das Kommunikationsnetzwerk festzustellen. Hierdurch kann die Anzahl an Nachrichten, welche üblicherweise im Zusammenhang mit der Steuerung des Kommunikationsnetzwerkes ausgetauscht werden müssen, reduziert werden. Ergebnis ist deshalb eine stärker skalierbare Architektur des Kommunikationsnetzwerks. Darüber hinaus kann aus Kontextinformationen der Zweck von Netzwerkaktivitäten abgeleitet werden, wodurch die Steuerung des Kommunikationsnetzwerks proaktiv erfolgen kann. Hierdurch können Probleme z.B. bereits behandelt werden, bevor diese tatsächlich auftreten.

Die Publikation "Toward Efficient Monitoring" - Jia Jiao et. al. (XP11055122) offenbart ein Verfahren zum rechnergestützten Bestimmen einer Steuerungsgroesse anhand von Kontextinformationen einer oder mehrerer zu steuernder Einheiten bei der die Ermittlung eines Zustandswertes einer zu steuernden Einheit in Abhängigkeit einer zu einem früheren Zeitpunkt gemachten Abschätzung erfolgt.

Die Steuerung eines Kommunikationsnetzwerkes anhand von Kontextinformationen ist im Wesentlichen mit zwei Nachteilen verbunden:
1. Es existiert eine Verzögerung zwischen der Quelle der Kontextinformation und einer die Kontextinformation verarbeitenden Einheit des Kommunikationsnetzwerks. Diese ist üblicherweise durch die Übertragung der Kontextinformation von der Quelle an die verarbeitende Einheit des Kommunikationsnetzwerks verursacht. Dies bedeutet, dass die die Kontextinformation verarbeitende Einheit die in der Kontextinformation enthaltene Information über die Quelle und die übertragenden Komponenten mit nicht aktuellem Inhalt erhält. In den mittlerweile üblichen, hochdynamischen Kommunikationsnetzwerken stellt dies einen großen Nachteil dar.
2. In einem Kommunikationsnetzwerk ist die zur Verfügung stehende Bandbreite für die Übertragung von Daten eine sorgsam zu nutzende Ressource. Dies trifft insbesondere auf Kommunikationsnetzwerke zu, welche die Daten drahtlos übertragen. Grundsätzlich besteht hierbei deshalb das Bedürfnis, die zur Verfügung stehende Bandbreite nach Möglichkeit für Nutzdaten und nicht für Steuerungsdaten zu verwenden. Von einer Quelle bereitgestellte Kontextinformationen, die für die Steuerung und das Management des Kommunikationsnetzwerkes verwendet werden, fallen in die Kategorie der Steuerinformationen. Aufgrund dessen sollte die Übertragung von Kontextinformationen in einem Kommunikationsnetzwerk minimal sein, um eine effiziente Nutzung der Bandbreite sicher zu stellen.

Um Kontextinformationen verwenden zu können, werden diese von einer zentralen Einheit des Kommunikationsnetzwerks gesammelt, wobei die Kontextinformationen von den Quellen an diese Einheit über das Kommunikationsnetzwerk übertragen werden. Um genaue Informationen über das Verhalten der Quellen und der die Kontextinformationen übertragenden Einheiten des Kommunikationsnetzwerkes zu erhalten, muss eine entsprechende Häufigkeit der Übertragung der Kontextinformationen gewährleistet sein. Aufgrund der oben beschriebenen Problematik wurde zur Reduzierung der Häufigkeit der Kontextinformationsübertragung dazu übergegangen, eine Schätzung von Kontextinformationen vorzunehmen, welche auf tatsächlichen Kontextinformationen der Vergangenheit beruht. Hierbei wird damit die Historie der Kontextinformationen der Vergangenheit berücksichtigt.

Es ist Aufgabe der vorliegenden Erfindung, ein alternatives Verfahren zum rechnergestützten Bestimmen einer Steuerungsgröße anhand von Kontextinformationen einer oder mehrerer zu steuernder Einheiten anzugeben, welche mit einer minimalen Anzahl an Kontextinformationen auskommt. Es ist ferner Aufgabe der vorliegenden Erfindung, eine Steuerung anzugeben, welche die Durchführung des erfindungsgemäßen Verfahrens ermöglicht. Eine weitere Aufgabe der Erfindung besteht darin, ein Regelsystem anzugeben, welches die rechnergestützte Bestimmung einer Steuerungsgröße anhand von Kontextinformationen einer oder mehrerer zu steuernder Einheiten ermöglicht. Es soll ferner ein Computerprogrammprodukt angegeben werden.

Diese Aufgaben werden durch die Merkmale der unabhängigen Patentansprüche gelöst. Vorteilhafte Ausgestaltungen sind jeweils in den abhängigen Patentansprüchen wiedergegeben.

Bei einem erfindungsgemäßen Verfahren zum rechnergestützten Bestimmen einer Steuerungsgröße anhand von Kontextinformationen einer oder mehrerer zu steuernder Einheiten ermittelt eine Steuerung durch Simulation eine simulierte Kontextinformation, die als Steuerungsgröße verwendet wird, wobei die simulierte Kontextinformation eine erste Größe umfasst, die einen vermuteten Zustand der einen oder mehreren Einheiten zu einem gegebenen Zeitpunkt repräsentiert. Die Steuerung vergleicht eine empfangene Kontextinformation, welche eine zweite Größe umfasst, die den tatsächlichen Zustand der zu steuernden Einheit zu einem Zeitpunkt repräsentiert, welcher vor dem gegebenen Zeitpunkt liegt, mit der simulierten Kontextinformation. Dabei wird überprüft, ob die simulierte Kontextinformation mit der Kontextinformation innerhalb vorgegebener Grenzen übereinstimmt. Die Steuerung fordert von der einen oder den mehreren zu steuernden Einheiten eine aktualisierte Kontextinformation an, wenn die simulierte Kontextinformation außerhalb der vorliegenden Grenzen mit der Kontextinformation zu dem gegebenen Zeitpunkt übereinstimmt.

Durch das erfindungsgemäße Verfahren kann damit die Anzahl der zwischen der einen oder den mehreren zu steuernden Einheiten und der Steuerung übertragenen Kontextinformationen reduziert werden. Hierzu stellt die Steuerung eine Vermutung an, in welchem Zustand die gesteuerten Einheiten sein müssten und vergleicht diese Erwartung mit den tatsächlich eintreffenden Kontextinformationen von der oder den zu steuernden Einheiten. Weichen die erwarteten Werte von den empfangenen Kontextinformationen ab, so wird die Nachfragerate verstärkt.

In einer weiteren Ausgestaltung fordert die Steuerung von der einen oder den mehreren zu steuernden Einheiten keine aktualisierte Kontextinformation an, wenn die simulierte Kontextinformation innerhalb der vorliegenden Grenzen mit der Kontextinformation zu dem gegebenen Zeitpunkt übereinstimmt. Weichen die erwarteten Werte von den empfangenen Kontextinformationen ab, so wird die Nachfragerate verringert.

In einer weiteren Ausgestaltung wird zur Ermittlung der simulierten Kontextinformation die empfangene Kontextinformation als Eingangsgröße verarbeitet. Die Simulation stellt hierbei ein Modell der die Kontextinformation oder -informationen liefernden Einheit oder Einheiten dar, gegebenenfalls unter Berücksichtigung der bei der Übertragung zu der Steuerung beteiligten Komponenten. Dabei versucht das Modell, das Verhalten der Einheit oder Einheiten in der gleichen Weise nachzubilden, wie sich dieses oder diese in der Praxis verhalten. Der Steuerung zur Simulation der simulierten Kontextinformation wird damit eine Kontextinformation zugeführt, welche den Zustand der diese sendenden Einheit in der Vergangenheit repräsentiert. Durch das Modell der Simulation wird dies berücksichtigt, so dass die simulierte Kontextinformation einem gegenwärtigen Zustand der Einheit entspricht.

Aufgrund der Zeitverzögerung zwischen dem Absenden der Kontextinformation und dem Zuführen der Kontextinformation zu der Steuerung ist es zweckmäßig, wenn die simulierte Kontextinformation für den Vergleich mit der Kontextinformation zeitlich verzögert wird. Hierdurch kann die Zeitverzögerung bei der Übertragung der Kontextinformation berücksichtigt werden. Die Verzögerung wird zweckmäßigerweise variabel eingestellt in Abhängigkeit einer ermittelten oder geschätzten Verzögerung der Zeit von dem Absenden der Kontextinformation bis zum Erhalt der Kontextinformation bei der Steuerung.

In einer weiteren Ausgestaltung wird die simulierte und zeitlich verzögerte Kontextinformation mit der zum gegenwärtigen Zeitpunkt an der Steuerung anliegenden Kontextinformation verglichen.

Die Steuerung ermittelt zweckmäßigerweise nicht nur, ob die simulierte oder simulierte und zeitlich verzögerte Kontextinformation über ein vorgegebenes Maß hinaus von der Kontextinformation abweicht, sondern bevorzugt ein Maß für die Abweichung der simulierten oder simulierten und zeitlich verzögerten Kontextinformation von der empfangenen Kontextinformation. Hierbei wird das Maß der Abweichung zur Anpassung der Simulation verwendet. Dies bedeutet, dass das Modell der Simulation in Abhängigkeit des Maßes der Abweichung adaptiert wird.

Das Maß der Abweichung wird in einer weiteren Ausgestaltung zur Anpassung eines Zeitabstands, mit dem die eine oder die mehreren Einheiten die aktualisierten Kontextinformationen an die Steuerung übertragen, verwendet. Hierbei ist vorgesehen, einen Zeitabstand zu verkleinern, je größer das Maß der Abweichung ist. In entsprechender Weise ist vorgesehen, den Zeitabstand zu vergrößern, je kleiner das Maß der Abweichung ist. Jedoch wird die Nachfragestrategie der Steuerung an das Maß der Abweichung der simulierten Kontextinformation an die empfangene Kontextinformation angepasst. Eine starke Abweichung führt dazu, die Häufigkeit der übertragenen Kontextinformationen zu erhöhen, um das Modell der Simulation auf den tatsächlichen Zustand besser einstellen zu können. Hierdurch erfolgt eine automatisierte Selbstanpassung der Simulation der Steuerung.

In einer weiteren Ausgestaltung wird eine von der einen oder den mehreren Einheiten an die Steuerung zu übertragende Kontextinformation zeitlich verzögert und mit der unverzögerten Kontextinformation verglichen, wobei das Übertragen der Kontextinformation an die Steuerung veranlasst wird, wenn der Vergleich der unverzögerten und der verzögerten Kontextinformation eine Abweichung ergibt, die über ein vorgegebenes Maß hinausgeht. Hierdurch kann auf Seiten der die Kontextinformation absendenden Einheit sichergestellt werden, dass starke Abweichungen der Kontextinformation entdeckt werden. In diesem Fall überträgt die Einheit eine aktualisierte Kontextinformation auch ohne gesonderte Aufforderung durch die Steuerung an dieselbe.

Eine erfindungsgemäße Steuerung zum rechnergestützten Bestimmen einer Steuerungsgröße anhand von Kontextinformationen einer oder mehrerer zu steuernder Einheiten ist dazu ausgebildet, durch Simulation eine simulierte Kontextinformation zu ermitteln, wobei die simulierte Kontextinformation eine erste Größe umfasst, die einen vermuteten Zustand der einen oder mehreren Einheiten zu einem gegebenen Zeitpunkt repräsentiert. Sie ist weiter dazu ausgebildet, eine empfangene Kontextinformation, welche eine zweite Größe umfasst, die den tatsächlichen Zustand der zu steuernden Einheit zu einem Zeitpunkt repräsentiert, welcher vor dem gegebenen Zeitpunkt liegt, mit der simulierten Kontextinformation zu vergleichen und zu überprüfen, ob die simulierte Kontextinformation mit der Kontextinformation innerhalb vorgegebener Grenzen übereinstimmt. Die Steuerung ist weiter dazu ausgebildet, von der einen und den mehreren zu steuernden Einheiten eine aktualisierte Kontextinformation anzufordern, wenn die simulierte Kontextinformation außerhalb der vorliegenden Grenzen mit der Kontextinformation zu dem gegebenen Zeitpunkt übereinstimmt und die simulierte Kontextinformation als Steuerungsgröße bereitzustellen.

Hierbei sind die gleichen Vorteile verbunden, wie sie vorstehend in Verbindung mit dem erfindungsgemäßen Verfahren bereits erläutert wurden.

Die erfindungsgemäße Steuerung ist in einer Ausgestaltung dazu ausgebildet, von der einen oder den mehreren zu steuernden Einheiten keine aktualisierte Kontextinformation anzufordern, wenn die simulierte Kontextinformation innerhalb der vorliegenden Grenzen mit der Kontextinformation zu dem gegebenen Zeitpunkt übereinstimmt.

Gemäß einer weiteren Ausgestaltung ist die Steuerung dazu ausgebildet, zur Ermittlung der simulierten Kontextinformation die empfangene Kontextinformation als Eingangsgröße zu verarbeiten.

Eine weitere zweckmäßige Ausgestaltung sieht vor, dass die Steuerung dazu ausgebildet ist, die simulierte Kontextinformation für den Vergleich mit der Kontextinformation zeitlich zu verzögern.

Von der Erfindung ist ferner ein Regelsystem mit einer Steuerung und einer oder mehreren zu steuernden Einheiten umfasst, bei dem die Steuerung wie vorstehend ausgebildet ist. Auch hiermit sind die gleichen Vorteile verbunden, wie sie bereits vorstehend erläutert wurden.

Bei dem Regelsystem kann es sich beispielsweise um ein Kommunikationsnetzwerk handeln. Dieses kann insbesondere nach dem Standard IEEE 802.21 ausgebildet sein.

Die Steuerung stellt in einem derartigen Kommunikationsnetzwerk eine Einheit in einem Netzwerkmanagementsystem des Kommunikationsnetzwerks dar. Im Gegensatz dazu sind die eine oder die mehreren Einheiten ein Endgerät des Kommunikationsnetzwerks. Die eine oder die mehreren Einheiten können auch ein Zugangsrechner des Kommunikationsnetzwerks sein.

Von der Erfindung ist ferner ein Computerprogrammprodukt umfasst, das direkt in den internen Speicher eines digitalen Computers geladen werden kann und Softwarecodeabschnitte umfasst, mit denen die Schritte gemäß dem vorstehend beschriebenen Verfahren ausgeführt werden, wenn das Produkt auf einem Computer läuft.

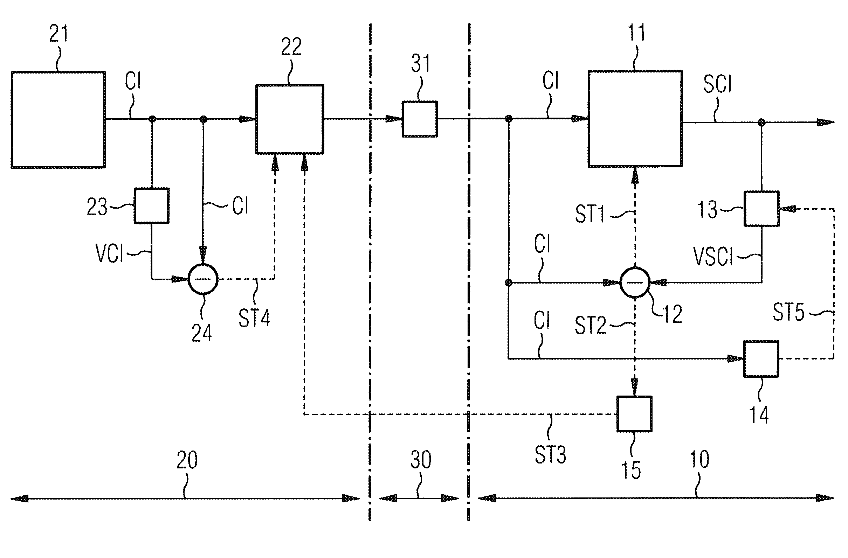

Die Erfindung wird nachfolgend weiter anhand eines in der Zeichnung dargestellten Ausführungsbeispiels erläutert. Die einzige Figur zeigt eine schematische Darstellung eines erfindungsgemäßen Regelsystems.

Der erfindungsgemäße Regelkreis umfasst als Hauptkomponenten eine Steuerung 10, beispielhaft eine zu steuernde Einheit 20 sowie eine zwischen der Steuerung 10 und der zu steuernden Einheit 20 angeordnete Übertragungsstrecke 30. Die Steuerung 10 umfasst als zentrales Element einen Kontextsimulator 11, der ein Modell für die Evaluation von auszuwertenden Kontextinformationen umfasst. Die Kontextinformation wird durch beispielhaft eine Kontextquelle 21 der zu steuernden Einheit 20 erzeugt und über die Übertragungsstrecke 30 dem Kontextsimulator 11 zugeführt. Die Übertragungsstrecke 30 kann eine Vielzahl an die Kontextinformation übertragende Einheiten bzw. Komponenten umfassen, so dass eine zum Zeitpunkt t0 abgesendete Kontextinformation CI erst zu einem Zeitpunkt t1 an einem Eingang des Kontextsimulators 11 anliegt. Die Übertragungsstrecke 30 ist deshalb durch ein stellvertretend hierfür verantwortliches Verzögerungselement 31 repräsentiert.

Der Kontextsimulator 11 ermittelt aus der zum Zeitpunkt t1 empfangenen, jedoch zum Zeitpunkt t0 erzeugten Kontextinformation durch Simulation eine simulierte Kontextinformation SCI für den Zeitpunkt t1. Mit anderen Worten bedeutet dies, dass der Kontextsimulator die Kontextinformation für einen gegenwärtigen Zeitpunkt t1 aus einer aus der Vergangenheit (t0) stammenden Kontextinformation ermittelt.

Um zu überprüfen, ob die simulierte Kontextinformation SCI mit der tatsächlichen Kontextinformation CI der Kontextquelle 21 übereinstimmt, wird diese einem Verzögerungsmittel 13 zugeführt, welche die simulierte Kontextinformation SCI um eine variable Zeit t verzögert und einem Vergleicher 12 zuführt. Dieser erhält als weitere Eingangsinformation die Kontextinformation CI. Durch den Vergleicher 12 wird ein Maß für die Abweichung der simulierten, verzögerten Kontextinformation VSCI von der Kontextinformation CI ermittelt.

Überschreitet das Maß eine vorgegebene Schwelle, so wird von dem Vergleicher 12 einerseits ein Steuersignal ST1 an den Kontextsimulator 11 abgegeben, um das Modell der Simulation entsprechend dem Maß der Abweichung anzupassen. Weiterhin wird ein Steuersignal ST2 an eine Einheit 15 zur Anforderung einer aktualisierten Kontextinformation übermittelt. Diese gibt ein Steuersignal ST3 an eine Einheit 22 zur Übermittlung einer aktualisierten Kontextinformation ab, welche beim Erhalt des Steuersignals ST3 eine aktualisierte Kontextinformation über die Übertragungsstrecke 30 an den Kontextsimulator 11 überträgt.

Dies bedeutet, dass durch das Maß der Abweichung der simulierten, verzögerten Kontextinformation VSCI von der tatsächlichen Kontextinformation CI die Häufigkeit der Übermittlung von Kontextinformationen (d.h. der Zeitabstand zwischen zwei Kontextinformationen) von der durch zu steuernden Einheit 20 an die Steuerung 10 eingestellt werden kann. Gleichzeitig kann auch das Modell der Simulation an die Güte der Simulation angepasst werden.

Die Verzögerung durch das Verzögerungsmittel 13 wird durch eine Einheit 14 zur Schätzung der Verzögerung bereitgestellt, welche ein dem Maß der Verzögerung entsprechendes Steuersignal ST5 an das Verzögerungsmittel 13 abgibt. Um das Maß der Verzögerung ermitteln zu können, erhält die Einheit 14 die Kontextinformation CI als Eingangssignal. Die Verzögerung t entspricht im Idealfall der Differenz von t1 und to.

Die Einheit 22 ist verantwortlich für die Übertragung von aktualisierten Kontextinformationen zu der Steuerung 10. Diese überträgt aktualisierte Kontextinformationen üblicherweise in Reaktion auf eine Anforderung der Einheit 15 der Steuerung 10. Um jedoch auch plötzlichen Änderungen der Kontextinformation auf Seiten der zu steuernden Einheit 20 Rechnung tragen zu können, wird die Kontextinformation CI einem Verzögerungsmittel 23 zugeführt, welches diese um eine vorgegebene Zeitspanne verzögert. Das Ausgangssignal des Verzögerungsmittels 23 wird einem Vergleicher 24 zusammen mit der ursprünglichen Kontextinformation CI zugeführt.

Wird eine signifikante Abweichung der verzögerten Kontextinformation VCI von der unverzögerten Kontextinformation CI festgestellt, so wird ein Steuersignal ST4 von dem Vergleicher 24 an die Einheit 22 abgegeben, worauf diese in Reaktion hierauf eine aktualisierte Kontextinformation an die Steuerung 10 überträgt.

Eine Kontextinformation kann beispielsweise einen Zustand der zu steuernden Einheit 20 darstellen. Unter Kontextinformation ist prinzipiell jede beliebige Information, die von der Einheit 20 erzeugt wird, zu verstehen.

Das erfindungsgemäße Verfahren kann beispielsweise in einem Kommunikationsnetzwerk, insbesondere gemäß dem Standard IEEE 802.21, eingesetzt werden. Insbesondere erlaubt das erfindungsgemäße Verfahren ein Kontextbezogenes Netzwerkmanagement. Netzwerkmanagement umfasst in allgemeiner Form das Ermitteln relevanter Informationen von Einheiten des Netzwerks, wie z.B. von Netzwerkzugangsrechnern oder Endgeräten, die Interpretation dieser Informationen sowie das Fassen einer Entscheidung und die Übertragung dieser Entscheidung zu den relevanten Einheiten des Kommunikationsnetzwerks. Diese Informationen können unter Verwendung von Kontextinformationen optimiert getroffen werden.

So ist es beispielsweise möglich, kontextbezogene Informationen für sog. Handover-Prozesse zu verwenden, bei denen ein Endgerät von einem Zugangsrechner zu einem anderen Zugangsrechner wechselt, gegebenenfalls unter Veränderung einer Zugangstechnologie. Die die Kontextinformationen verarbeitende Steuerung erhält hierbei als Kontextinformationen z.B. eine Signalstärke, Delay, Jitter, von den Zugangsrechnern und trifft eine Entscheidung, welche verfügbare Zugangstechnologie an einem bestimmten Zugangsrechner von dem Endgerät verwendet werden soll. Die Kontextinformation kann hierbei ebenso dazu verwendet werden, Multimedia-Dienste, welche durch einen Nutzer in Anspruch genommen werden, in Reaktion auf ein von dem Nutzer gewähltes Interface anzupassen.

Weiterhin ermöglicht das Verfahren die Überwachung der Datenmenge, die in dem Kommunikationsnetzwerk übertragen wird. Hierbei können Messeinheiten, die verantwortlich für die Überwachung der Datenmenge sind, als Datenerfassungseinheiten dienen. Die hierbei vorgenommenen Messungen können zu sog. Kollektoren übertragen werden, welche die Messungen zum Zweck einer Vergebührung verarbeiten. Ein derartiger Informationsaustausch läuft ähnlich dem Austausch von Kontextinformationen ab, so dass eine Anpassung des Verfahrens an solche Messsysteme möglich ist.

Die Erfindung weist zusammenfassend folgende Vorteile auf:

Der Kontextsimulator stellt eine Lösung für das Problem der Zeitverzögerung bei der Übertragung von Kontextinformationen bereit, indem eine Kontextinformation zu einem gegebenen Zeitpunkt einer zu steuernden Einheit durch Simulation ermittelt wird. Die Simulation erlaubt es, auf eine kontinuierliche Datenaktualisierung in kurzen Zeitabständen seitens der zu überwachenden Einheit zu verzichten. Darüber hinaus kann der Kontextsimulator an Veränderungen in dem Kontextinformationsfluss angepasst werden, wodurch die von dem Kontextsimulator bereitgestellten Ergebnisse eine hohe Zuverlässigkeit aufweisen.

Durch das Bereitstellen einer Einheit zur Anforderung einer aktualisierten Kontextinformation und einer Einheit zur Übermittlung der aktualisierten Kontextinformation ist sichergestellt, dass die Anzahl der in dem Regelsystem ausgetauschten Steuernachrichten minimiert ist. Hierdurch kann eine zur Verfügung gestellte Bandbreite optimiert ausgenutzt werden. Die Anpassung einer Zeitperiode zwischen zwei übertragenen Kontextinformationen erfolgt in Abhängigkeit der Genauigkeit der Simulation. Darüber hinaus kann schnellen Änderungen der Kontextinformationen auf Seiten der zu steuernden Einheit begegnet werden. Hierdurch wird eine schnellere Reaktionszeit auf tatsächlich auftretende Änderungen bei den zu steuernden Einheiten ermöglicht.

Die Erfindung verwendet im Gegensatz zu einer Schätzung der Kontextinformation aus einer Mehrzahl an vergangenen Kontextinformationen im Stand der Technik eine Simulation, um den Wert der Kontextinformation zu einem gegebenen Zeitpunkt zu ermitteln, wobei keine Notwendigkeit besteht, dass von der zu steuernden Einheit in regelmäßigen Abständen Kontextinformationen übertragen werden. Hierdurch kann die Anzahl an ausgetauschten Informationen verringert werden.

Die Einheit zur Anforderung einer aktualisierten Kontextinformation ermöglicht eine schnelle Reaktion auf Veränderungen der Kontextinformationen der zu steuernden Einheit. Theoretisch kann die Schätzung oder Simulation einer Kontextvariablen dadurch verbessert werden, indem Zeitabstände zwischen zwei von der zu steuernden Einheit übertragenen Kontextinformationen für einen bestimmten Zeitraum verringert werden. Dies sollte nur dann erfolgen, wenn die simulierte Kontextinformation mit der tatsächlichen Kontextinformation über ein vorgegebenes Maß hinaus nicht übereinstimmt. Wenn die Simulation korrekt abläuft, kann die Aktualisierungsrate hingegen verringert werden (d.h. die Zeitspanne zwischen zwei gesendeten Kontextinformationen vergrößert werden).

Die Einheit zur Anforderung einer aktualisierten Kontextinformation ermöglicht damit einen Adaptionsmechanismus für die Aktualisierung der Kontextinformationen.

## Patentansprüche

1. Verfahren zum rechnergestützten Bestimmen einer Steuerungsgröße anhand von Kontextinformationen einer oder mehrerer zu steuernder Einheiten (20), bei dem
- eine Steuerung (10) durch Simulation eine simulierte Kontextinformation (SCI) ermittelt, die als Steuerungsgröße verwendet wird, wobei die simulierte Kontextinformation (SCI) eine erste Größe umfasst, die einen vermuteten Zustand der einen oder mehreren Einheiten (20) zu einem gegebenen Zeitpunkt, t1, repräsentiert,
- die Steuerung (10) eine empfangene Kontextinformation (CI), welche eine zweite Größe umfasst, die den tatsächlichen Zustand der zu steuernden Einheit (20) zu einem Zeitpunkt repräsentiert, welcher vor dem gegebenen Zeitpunkt liegt, mit der simulierten Kontextinformation (SCI) vergleicht und überprüft, ob die simulierte Kontextinformation (SCI) mit der Kontextinformation (CI) innerhalb vorgegebener Grenzen übereinstimmt, und
- die Steuerung (10) von der einen oder den mehreren zu steuernden Einheiten (20) eine aktualisierte Kontextinformation anfordert, wenn die simulierte Kontextinformation (SCI) außerhalb der vorliegenden Grenzen mit der Kontextinformation (CI) zu dem gegebenen Zeitpunkt über einstimmt.

2. Verfahren nach Anspruch 1, bei dem die Steuerung (10) von der einen oder den mehreren zu steuernden Einheiten (20) keine aktualisierte Kontextinformation anfordert, wenn die simulierte Kontextinformation (SCI) innerhalb der vorliegenden Grenzen mit der Kontextinformation (CI) zu dem gegebenen Zeitpunkt übereinstimmt.

3. Verfahren nach Anspruch 1 oder 2, bei dem zur Ermittlung der simulierten Kontextinformation (SCI) die empfangene Kontextinformation (CI) als Eingangsgröße verarbeitet wird.

4. Verfahren nach einem der vorherigen Ansprüche, bei dem die simulierte Kontextinformation (SCI) für den Vergleich mit der Kontextinformation (CI) zeitlich verzögert wird.

5. Verfahren nach Anspruch 4, bei dem die Verzögerung variabel eingestellt wird in Abhängigkeit einer ermittelten oder geschätzten Verzögerung der Zeit von dem Absenden der Kontextinformation (CI) bis zum Erhalt der Kontextinformation (CI) bei der Steuerung (10).

6. Verfahren nach Anspruch 4 oder 5, bei dem die simulierte und zeitlich verzögerte Kontextinformation (SCI) mit der zum gegenwärtigen Zeitpunkt an der Steuerung (10) anliegenden Kontextinformation (CI) verglichen wird.

7. Verfahren nach einem der vorherigen Ansprüche, bei dem die Steuerung (10) ein Maß für die Abweichung der simulierten oder simulierten und zeitlich verzögerten Kontextinformation (SCI) von der Kontextinformation (CI) ermittelt.

8. Verfahren nach Anspruch 7, bei dem das Maß der Abweichung zur Anpassung der Simulation verwendet wird.

9. Verfahren nach Anspruch 7 oder 8, bei dem das Maß der Abweichung zur Anpassung eines Zeitabstands, mit dem die eine oder die mehreren Einheiten (20) die aktualisierte Kontextinformationen an die Steuerung (10) übertragen, verwendet wird.

10. Verfahren nach einem der Ansprüche 7 bis 9, bei dem ein Zeitabstand verkleinert wird, je größer das Maß der Abweichung ist.

11. Verfahren nach einem der Ansprüche 7 bis 9, bei dem ein Zeitabstand vergrößert wird, je kleiner das Maß der Abweichung ist.

12. Verfahren nach einem der vorherigen Ansprüche, bei dem eine von der einen oder den mehreren Einheiten (20) an die Steuerung (10) zu übertragene Kontextinformation zeitlich verzögert und mit der unverzögerten Kontextinformation (CI) verglichen wird, wobei das Übertragen der Kontextinformation an die Steuerung (10) veranlasst wird, wenn der Vergleich der unverzögerten und der verzögerten Kontextinformation (CI, VCI) eine Abweichung ergibt, die über ein vorgegebenes Maß hinaus geht.

13. Steuerung (10) zum rechnergestützten Bestimmen einer Steuerungsgröße anhand von Kontextinformationen einer oder mehrerer zu steuernder Einheiten (20), die dazu ausgebildet ist,
- durch Simulation eine simulierte Kontextinformation (SCI) zu ermitteln, wobei die simulierte Kontextinformation (SCI) eine erste Größe umfasst, die einen vermuteten Zustand der einen oder mehreren Einheiten (20) zu einem gegebenen Zeitpunkt, t1, repräsentiert,
- eine empfangene Kontextinformation (CI), welche eine zweite Größe umfasst, die den tatsächlichen Zustand der zu steuernden Einheit (20) zu einem Zeitpunkt repräsentiert, welcher vor dem gegebenen Zeitpunkt liegt, mit der simulierten Kontextinformation (SCI) zu vergleichen und zu überprüfen, ob die simulierte Kontextinformation (SCI) mit der Kontextinformation (CI) innerhalb vorgegebener Grenzen übereinstimmt,
- von der einen oder den mehreren zu steuernden Einheiten (20) eine aktualisierte Kontextinformation anzufordern, wenn die simulierte Kontextinformation (SCI) außerhalb der vorliegenden Grenzen mit der Kontextinformation (CI) zu dem gegebenen Zeitpunkt übereinstimmt, und
- die simulierte Kontextinformation (SCI) als Steuerungsgröße bereitzustellen.

14. Steuerung nach Anspruch 13, bei dem diese dazu ausgebildet ist, von der einen oder den mehreren zu steuernden Einheiten (20) keine aktualisierte Kontextinformation anzufordern, wenn die simulierte Kontextinformation (SCI) innerhalb der vorliegenden Grenzen mit der Kontextinformation (CI) zu dem gegebenen Zeitpunkt übereinstimmt.

15. Steuerung nach Anspruch 13 oder 14, bei dem diese dazu ausgebildet ist, zur Ermittlung der simulierten Kontextinformation (SCI) die empfangene Kontextinformation (CI) als Eingangsgröße zu verarbeiten.

16. Steuerung nach einem der Ansprüche 13 bis 15, bei dem diese dazu ausgebildet ist, die simulierte Kontextinformation (SCI) für den Vergleich mit der Kontextinformation (CI) zeitlich zu verzögern.

17. Regelsystem mit einer Steuerung (10) und einer oder mehreren zu steuernden Einheiten (20), bei dem die Steuerung nach einem der Ansprüche 13 bis 16 ausgebildet ist.

18. Regelsystem nach Anspruch 17, bei dem das Regelsystem ein Kommunikationsnetzwerk, insbesondere nach dem Standard IEEE 802.21, ist.

19. Regelsystem nach Anspruch 18, bei dem die Steuerung (10) eine Einheit (20) in einem Netzwerkmanagementsystem ist.

20. Regelsystem nach Anspruch 18 oder 19, bei dem die eine oder die mehreren Einheiten (20) ein Endgerät des Kommunikationsnetzwerks ist oder sind.

21. Regelsystem nach einem der Ansprüche 18 bis 20, bei dem die eine oder die mehreren Einheiten (20) ein Zugangsrechner des Kommunikationsnetzwerks ist oder sind.

22. Computerprogrammprodukt, das direkt in den internen Speicher eines digitalen Computers geladen werden kann und Softwarecodeabschnitte umfasst, mit denen die Schritte gemäß einem der Ansprüche 1 bis 12 ausgeführt werden, wenn das Produkt auf einem Computer läuft.

## Claims

1. Method for the computer-assisted determination of a control variable using context information from one or more units (20) to be controlled, in which
- a controller (10) determines a simulated item of context information (SCI), which is used as a control variable, by means of simulation, with the simulated item of context information (SCI) including a first variable which represents an assumed state of the one or more units (20) at a given point in time, t1,
- the controller (10) compares and monitors a received item of context information (CI), which includes a second variable, which represents the actual state of the unit (20) to be controlled at a point in time which is before the given point in time, with the simulated context information (SCI) to determine whether the simulated context information (SCI) corresponds to the context information (CI) within predetermined limits, and
- the controller (10) requests an updated item of context information from the one or more units (20) to be controlled if the simulated context information (SCI) outside the current limits corresponds to the context information (CI) at the given point in time.

2. Method according to claim 1, in which the controller (10) does not request any updated context information from one or more units (20) to be controlled, if the simulated context information (SCI) within the present limits corresponds to the context information (CI) at the given point in time.

3. Method according to claim 1 or 2, in which the received context information (CI) is processed as an input variable in order to determine the simulated context information (SCI).

4. Method according to one of the preceding claims, in which the simulated context information (SCI) is temporally delayed for the comparison with the context information (CI).

5. Method according to claim 4, in which the delay is set variably as a function of a determined or estimated time delay from sending the context information (CI) to receiving the context information (CI) at the controller (10).

6. Method according to claim 4 or 5, in which the simulated and temporally delayed context information (SCI) is compared with the context information (CI) present on the controller (10) at the current point in time.

7. Method according to one of the preceding claims, in which the controller (10) determines a degree for the deviation of the simulated or simulated and temporally delayed context information (SCI) from the context information (CI).

8. Method according to claim 7, in which the degree of the deviation is used to adjust the simulation.

9. Method according to claim 7 or 8, in which the degree of the deviation is used for adjusting a time interval with which one or more units (20) transmit the updated context information to the controller.

10. Method according to one of claims 7 to 9, in which a time interval is reduced, the greater the degree of deviation.

11. Method according to one of claims 7 to 9, in which a time interval is increased, the smaller the degree of deviation.

12. Method according to one of the preceding claims, in which one of the one or more units (20) on the controller (10) is temporally delayed in respect of the transmitted context information and is compared with the undelayed context information (CI), with the transmission of the context information to the controller (10) being triggered if the comparison of the undelayed and the delayed context information (CI, VCI) produces a deviation which exceeds a predetermined degree.

13. Controller (10) for the computer-assisted determination of a control variable using context information from one or more units (20) to be controlled, which is embodied so as to
- determine a simulated item of context information (SCI) by means of simulation, with the simulated item of context information (SCI) having a first variable which represents an assumed state of the one or more units (20) at a given point in time, t1,
- compare and monitor a received item of context information (CI), which includes a second variable, which represents the actual state of the unit (20) to be controlled at a point in time which is before the given point in time, with the simulated context information (SCI) to determine whether the simulated context information (SCI) corresponds with the context information (CI) within predetermined limits,
- request an updated item of context information from one or more units (20) to be controlled, if the simulated context information (SCI) outside the present limits corresponds with the context information (CI) at the given point in time, and
- provide the simulated context information (SCI) as control variables.

14. Controller according to claim 13, in which this is embodied so as not to request context information from one or more units (20) to be controlled if the simulated context information (SCI) within the present limits corresponds to the context information (CI) at the given point in time.

15. Controller according to claim 13 or 14, in which this is embodied so as to process the received context information (CI) as an input variable in order to determine the simulated context information (SCI).

16. Controller according to one of claims 13 to 15, in which this is embodied so as to temporally delay the simulated context information (SCI) for the comparison with the context information (CI).

17. Regulating system with a controller (10) and one or more units (20) to be controlled, in which the controller is embodied as claimed in one of claims 13 to 16.

18. Regulating system according to claim 17, in which the regulating system is a communication network, in particular according to the IEEE 802.21 standard.

19. Regulating system according to claim 18, in which the controller (10) is a unit (20) in a network management system.

20. Regulating system according to claim 18 or 19, in which the one or more units (20) is or are a terminal of the communication network.

21. Regulating system according to one of claims 18 to 20, in which the one or more units (20) is or are an access computer of the communication network.

22. Computer program product, which can be directly loaded into the internal memory of a digital computer and comprises software code sections, with which the steps are implemented according to one of claims 1 to 12, if the product runs on a computer.

## Revendications

1. Procédé de détermination assistée par ordinateur d'une grandeur de commande à l'aide d'informations contextuelles d'une ou de plusieurs unités à commander (20), dans lequel
- une commande (10) détermine par simulation une information contextuelle simulée (SCI) qui est utilisée en tant que grandeur de commande, l'information contextuelle simulée (SCI) comprenant une première grandeur qui représente un état présumé de l'une ou des plusieurs unités (20) à un instant donné, t1;
- la commande (10) compare avec l'information contextuelle simulée (SCI) une information contextuelle reçue (CI) qui comprend une deuxième grandeur qui représente l'état effectif de l'unité à commander (20) à un instant qui précède l'instant donné et vérifie si l'information contextuelle simulée (SCI) coïncide avec l'information contextuelle (CI) dans des limites prédéterminées ; et
- la commande (10) demande une information contextuelle actualisée à l'une ou aux plusieurs unités à commander (20) lorsque l'information contextuelle simulée (SCI) coïncide, à l'instant donné, avec l'information contextuelle (CI) en dehors des limites présentes.

2. Procédé selon la revendication 1, dans lequel la commande (10) ne demande pas d'information contextuelle actualisée à l'une ou aux plusieurs unités à commander (20) lorsque l'information contextuelle simulée (SCI) coïncide, à l'instant donné, avec l'information contextuelle (CI) dans les limites présentes.

3. Procédé selon la revendication 1 ou 2, dans lequel l'information contextuelle reçue (CI) est traitée en tant que grandeur d'entrée pour déterminer l'information contextuelle simulée (SCI).

4. Procédé selon l'une des revendications précédentes, dans lequel l'information contextuelle simulée (SCI) est retardée dans le temps pour la comparaison avec l'information contextuelle (CI).

5. Procédé selon la revendication 4, dans lequel le retard est réglé de manière variable, en fonction d'un retard de temps déterminé ou estimé, de l'envoi de l'information contextuelle (CI) jusqu'à la réception de l'information contextuelle (CI) au niveau de la commande (10).

6. Procédé selon la revendication 4 ou 5, dans lequel l'information contextuelle simulée et retardée dans le temps (SCI) est comparée avec l'information contextuelle (CI) appliquée à la commande (10) à l'instant présent.

7. Procédé selon l'une des revendications précédentes, dans lequel la commande (10) détermine une mesure de l'écart de l'information contextuelle simulée ou simulée et retardée dans le temps (SCI) par rapport à l'information contextuelle (CI).

8. Procédé selon la revendication 7, dans lequel la mesure de l'écart est utilisée pour adapter la simulation.

9. Procédé selon la revendication 7 ou 8, dans lequel la mesure de l'écart est utilisée pour adapter un écart de temps avec lequel l'une ou les plusieurs unités (20) transmettent les informations contextuelles actualisées à la commande (10).

10. Procédé selon l'une des revendications 7 à 9, dans lequel un écart de temps se réduit d'autant plus que la mesure de l'écart est grande.

11. Procédé selon l'une des revendications 7 à 9, dans lequel un écart de temps augmente d'autant plus que la mesure de l'écart est petite.

12. Procédé selon l'une des revendications précédentes, dans lequel l'information contextuelle qui doit être transmise par l'une ou les plusieurs unités (20) à la commande (10) est retardée dans le temps et est comparée avec l'information contextuelle non retardée (CI), la transmission de l'information contextuelle à la commande (10) étant provoquée lorsqu'il résulte de la comparaison entre l'information contextuelle non retardée et l'information contextuelle retardée (CI, VCI) un écart qui dépasse une mesure prédéterminée.

13. Commande (10) pour déterminer une grandeur de commande de manière assistée par ordinateur à l'aide d'informations contextuelles d'une ou de plusieurs unités à commander (20), laquelle est réalisée pour
- déterminer par simulation une information contextuelle simulée (SCI), l'information contextuelle simulée (SCI) comprenant une première grandeur qui représente un état présumé de l'une ou des plusieurs unités (20) à un instant donné, t1;
- comparer avec l'information contextuelle simulée (SCI) une information contextuelle reçue (CI) qui comprend une deuxième grandeur qui représente l'état effectif de l'unité à commander (20) à un instant qui précède l'instant donné et vérifier si l'information contextuelle simulée (SCI) coïncide avec l'information contextuelle (CI) dans des limites prédéterminées ;
- demander une information contextuelle actualisée à l'une ou aux plusieurs unités à commander (20) lorsque l'information contextuelle simulée (SCI) coïncide, à l'instant donné, avec l'information contextuelle (CI) en dehors des limites présentes ; et
- fournir l'information contextuelle simulée (SCI) en tant que grandeur de commande.

14. Commande selon la revendication 13, réalisée pour ne pas demander d'information contextuelle actualisée à l'une ou aux plusieurs unités à commander (20) lorsque l'information contextuelle simulée (SCI) coïncide, à l'instant donné, avec l'information contextuelle (CI) dans les limites présentes.

15. Commande selon la revendication 13 ou 14, réalisée pour traiter l'information contextuelle reçue (CI) en tant que grandeur d'entrée pour déterminer l'information contextuelle simulée (SCI).

16. Commande selon l'une des revendications 13 à 15, réalisée pour retarder dans le temps l'information contextuelle simulée (SCI) pour la comparaison avec l'information contextuelle (CI).

17. Système de réglage comportant une commande (10) et une ou plusieurs unités à commander (20), dans lequel la commande est réalisée selon l'une des revendications 13 à 16.

18. Système de réglage selon la revendication 17, dans lequel le système de réglage est un réseau de communication, en particulier selon la norme IEEE 802.21.

19. Système de réglage selon la revendication 18, dans lequel la commande (10) est une unité (20) dans un système de gestion de réseau.

20. Système de réglage selon la revendication 18 ou 19, dans lequel l'une ou les plusieurs unités (20) est ou sont un terminal du réseau de communication.

21. Système de réglage selon l'une des revendications 18 à 20, dans lequel l'une ou les plusieurs unités (20) est ou sont un réseau d'accès du réseau de communication.

22. Produit de programme informatique qui peut être chargé directement dans la mémoire interne d'un ordinateur numérique et qui comprend des parties de code logiciel avec lesquelles sont exécutées les étapes selon l'une des revendications 1 à 12 lorsque le produit tourne sur un ordinateur.
